# EUROPEAN PATENT SPECIFICATION

(11) **EP 3 340 394 B1**
(45) Date of publication and mention of the grant of the patent: **08.04.2020**
(21) Application number: 17157920.4
(22) Date of filing: 24.02.2017
(51) Int. Cl.: H01R 13/631, H01R 13/635, H01R 13/64, B62M 6/90, H01R 13/24, H01R 13/62, B62M 6/80

(54) **FIXING CONNECTOR WITH CHARGING MODULE**
BEFESTIGUNG EINES STECKERS MIT EINEM LADEMODUL
LA FIXATION DES CONNECTEURS AVEC LE MODULE DE CHARGE

(30) Priority: 23.12.2016 TW 105142981
(43) Date of publication of application: 27.06.2018
(73) Proprietor: T-CONN Precision Corporation, New Taipei City (TW)
(72) Inventor: Yu, Chien-Yi, New Taipei City (TW)
(74) Representative: Lang, Christian

(56) References cited:
- EP-A1- 2 744 051
- US-A- 3 521 216
- US-A1- 2015 192 957

## Description

### BACKGROUND OF THE INVENTION

### Field of the Invention

The invention relates to a fixing connector with a charging module, particularly to a fixing seat with a charging module as well as an assembling structure of the fixing seat and a fixing stand.

### Descriptions of the Related Art

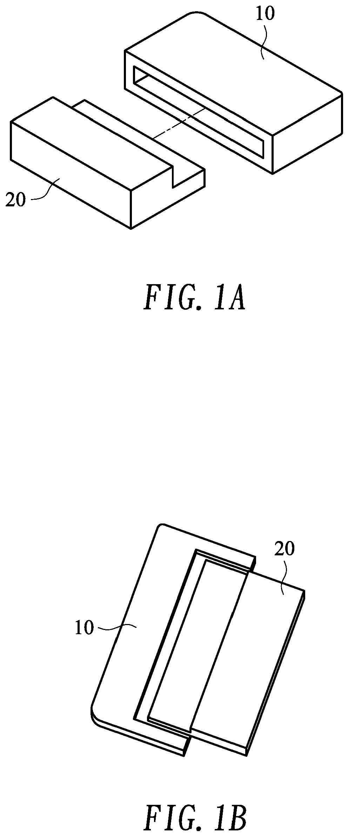

A conventional fixing stand of a bicycle and a fixing seat disposed on a parking pillar are as shown in Figures 1A and 1B, wherein the fixing stand 20 is disposed on a lower pipe of a bicycle, while the fixing seat 10 is disposed on the parking pillar next to a parking space, such that the bicycle is located on the parking pillar by allowing the fixing stand 20 to be engaged with and fixed to the fixing seat 10 when the bicycle is parked in the parking space. However, the conventional fixing seat 10 and the fixing stand 20 do not have charging module, so that the bicycle cannot be charged after it is parked at the parking pillar.

Patent application publication US 2015/0192957 A1 discloses a detachable electronic device with a fixing seat having the features of the preamble of claim 1.

Patent publication US 3521216 A discloses magnetic plug and socket assembly whose socket has the features of the preamble of claim 1.

Patent application publication EP 2744051 A1 discloses a connection apparatus for connecting signal lines. The connection apparatus comprises at least two signal lines, a first plug, at least a second plug and a movably mounted support system.

### SUMMARY OF THE INVENTION

The major objective of the invention is respective arrangements of conductive terminals on a fixing stand and a fixing seat by utilizing an assembling structure of the fixing stand and the fixing seat, such that a bicycle is charged due to connection of terminals when the fixing stand is engaged with the fixing seat.

The present invention provides a fixing seat with a charging module having the features of claim 1. The fixing seat according to the invention includes a seat and a charging module. The seat has a concave portion comprising an accommodation portion, in which the charging module is arranged. The charging module includes a body, a plurality of first conductive terminals and at least one elastic piece. The body has a plane and at least one anti-misinsertion key arranged on the plane. The body further comprises an outer frame and an assembly part mounted in the outer frame, on which the anti-misinsertion key is arranged. The first conductive terminals are arranged in the assembly part. The charging module further comprises at least one locating pin and at least one bolt. The body of the charging module is locked in the concave portion by the locating pin and the bolt. The locating pin penetrates into the body. The at least one elastic piece is harnessed around the locating pin. The first conductive terminals are arranged in the body and may protrude from the plane. The elastic piece is arranged between the body and the seat.

Further embodiments of the fixing seat according to the invention are subject-matter of the dependent claims.

In a preferred embodiment, the anti-misinsertion key includes a step portion arranged on the plane.

In the embodiments described above, the frame is made of metal, the assembly part is made of plastic.

In the embodiments described above, the at least one elastic piece is a compressible spring.

Additionally, a fixing connector of a fixing seat and a fixing stand is also provided by the invention. A preferred embodiment for the fixing connector of a fixing seat and a fixing stand according to the invention includes the fixing seat described above and a fixing stand. The fixing stand includes a convex portion, which is inserted in the concave portion of the fixing seat to assemble the fixing stand onto the fixing seat.

In the preferred embodiment described above, the convex portion has at least one anti-misinsertion groove corresponding to the at least one anti-misinsertion key. The anti-misinsertion key being inserted into the anti-misinsertion groove when the convex portion is inserted in the concave portion.

In the preferred embodiment described above, the convex portion has a plurality of second conductive terminals corresponding to the first conductive terminals, the first conductive terminals and the second conductive terminals forming electrical connection when the convex portion is inserted in the concave portion.

In another preferred embodiment, the first conductive terminals are arranged convexly on the plane fixedly, and the second conductive terminals are in the form of a hole.

Thereby, the bicycle may be charged by the charging module when the fixing stand of the bicycle is assembled onto the fixing seat of the parking pillar.

### BRIEF DESCRIPTION OF THE DRAWINGS

Figure 1A is a stereo schematic diagram showing a conventional fixing stand of a bicycle and a fixing seat disposed on a parking pillar.
Figure 1B is a stereo diagram showing assembling of the fixing stand and the fixing seat in Figure 1A.
Figure 2A is a stereo schematic diagram showing a preferred embodiment of a fixing seat according to the invention.
Figure 2B is a stereo diagram showing the fixing seat in Figure 2A with an uppermost part removed.
Figure 2C is a stereo diagram showing the fixing seat of Figure 2B viewed from another direction.
Figure 3 is a stereo exploded diagram showing an embodiment for a charging module of a fixing seat according to the invention.
Figure 4 is a stereo assembly diagram showing an embodiment of the charging module in Figure 3.
Figure 5 is a stereo exploded diagram showing another embodiment for a body of the charging module in Figure 4.
Figure 6 is a stereo exploded diagram of Figure 2B.
Figure 7 is a stereo schematic diagram showing another embodiment for a charging module of a fixing seat according to the invention.
Figure 8 is a stereo assembly diagram showing an assembling structure of the fixing seat in Figure 2B with a conventional fixing stand.
Figure 9 is a stereo schematic diagram showing an embodiment of a fixing stand according to the invention.
Figure 10 is a stereo assembly diagram showing assembling of the fixing seat in Figure 2B with the fixing stand in Figure 9.
Figure 11 is a stereo assembly diagram showing a fixing seat having the charging module shown in Figure 7 and the fixing stand shown in Figure 9.
Figure 12 is a stereo diagram showing another embodiment for a fixing connector of a fixing seat and a fixing stand according to the invention.
Figure 13 and 14 are sectional views showing another embodiment for a fixing connector of a fixing seat and a fixing stand according to the invention.
Figure 15 is a stereo schematic diagram showing another embodiment for a fixing connector of a fixing seat and a fixing stand according to the invention.

### DETAILED DESCRIPTION OF THE PREFERRED EMBODIMENT

For clear understanding of the above and other objectives, features and advantages of the invention, various embodiments are described in more detail hereinafter in conjunction with attached drawings.

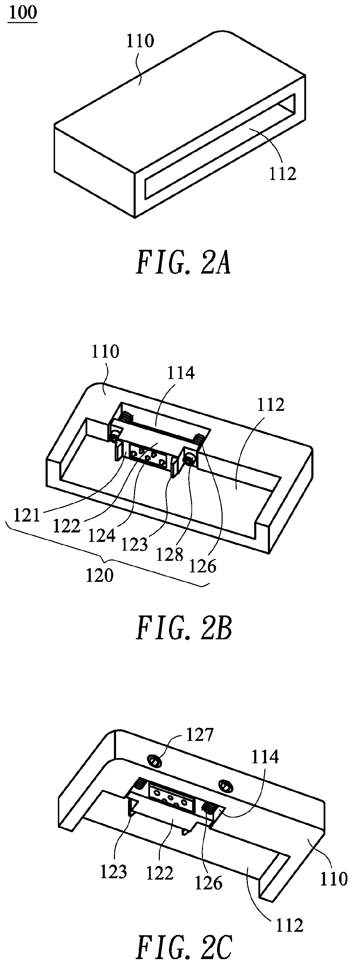

Refer to Figures 2A, 2B and 2C, which are a stereo schematic diagram showing a preferred embodiment of a fixing seat according to the invention, a stereo diagram showing a fixing seat with an uppermost part removed, and a stereo diagram showing the fixing seat of Figure 2B viewed from another direction. A fixing seat 100 according to the invention includes a seat 110 and a charging module 120. As shown in Figure 2A, the seat 110 is rectangular, and forms a concave portion 112 on a side thereof, into which insertion of the fixing stand 120 described later may be allowed. As shown in Figures 2B and 2C, the charging module 120 is arranged in the concave portion 112, and the charging module 120 is further disposed in an accommodation portion 114 of the concave portion 112. Moreover, the charging module 120 includes: a body 122, a plurality of first conductive terminals 124 and two elastic pieces 126. The first conductive terminals 124 are disposed on the body 122, the elastic pieces 126 are disposed between side walls of the body 122 and the accommodation portion 114, and two ends of the elastic pieces 126 push the side walls of the body 122 and the accommodation portion 114, respectively. The body 122 may move in the accommodation portion 114, and allow the body 122 to reset by elastic forces of the elastic pieces 126. The first conductive terminals 124 are made of metal, and the body 122 is made of plastic.

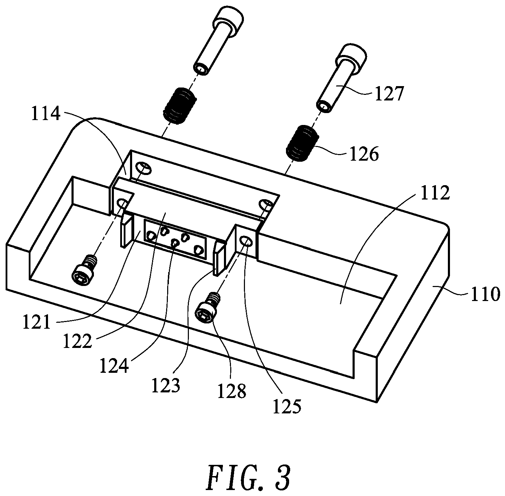

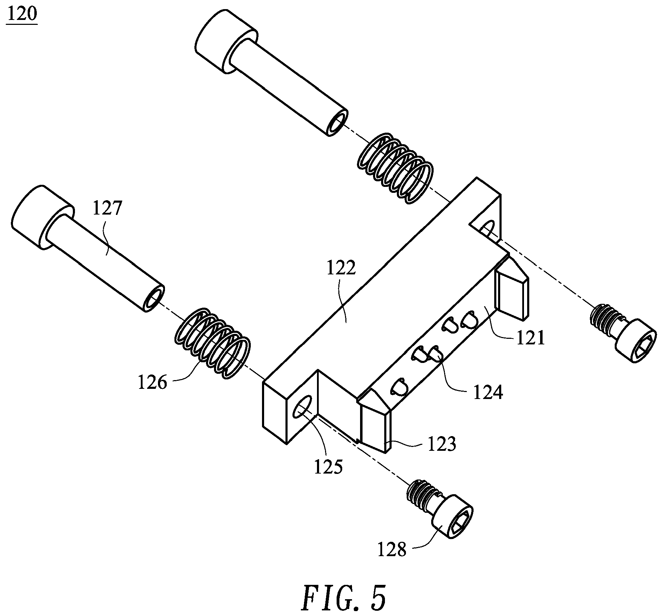

As shown in Figures 3, 4 and 5, which are a stereo exploded diagram showing a charging module of a fixing seat according to the invention, a stereo assembly diagram showing the charging module and a stereo exploded diagram showing a body of the charging module, respectively. The body 122 has a plane 121 and two anti-misinsertion keys 123 arranged on the plane 121. The first conductive terminals 124 are arranged in the body 122 and may be protruded out from the plane 121. The charging module 120 further includes two locating pins 127 and two bolts 128. As shown in Figures 2B and 2C, the body 122 penetrates through through-holes 125 on the body by the locating pins 127 for the bolts 128 to get screwed with the locating pins 127, followed by allowing the body 122 to be located in the accommodation portion 124 of the concave portion 122, while the elastic pieces 126 are harnessed around the locating pins 127. In this embodiment, the first conductive terminals 124 may be pogo pins. When the first conductive terminals 124 are pushed, the first conductive terminals 124 may be immersed in the body 122. After the pushing force vanishs, the first conductive terminals 124 are reset due to restored springs of the first conductive terminals 124. In this embodiment, the elastic piece 126 may be a compressible spring, for example.

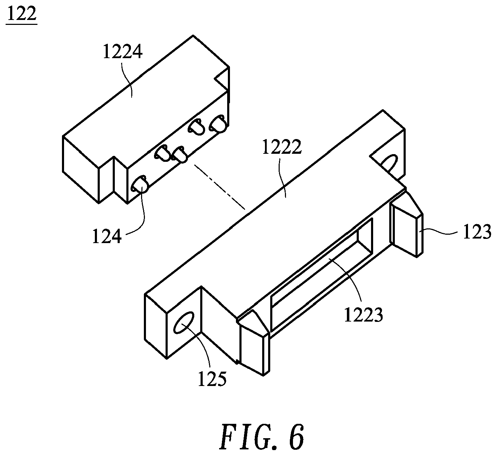

Refer to Figure 6, which is a stereo exploded diagram showing the body 122. In the embodiment, the body 122 is a two-piece assembling structure, which includes an outer frame 1222 and an assembly part 1224. The outer frame 1222 has an accommodation slot 1223. The assembly part 1224 is mounted in the outer frame 1222 by mating in the accommodation slot 1223. The anti-misinsertion key 123 is arranged on the outer frame 1222. The first conductive terminals 124 are arranged in the assembly part 1224. In this embodiment, the outer frame 1222 is made of metal, and the assembly part 1224 is made of plastic. Moreover, the two-piece structure of the body 122 described above may also be formed integrally as a unitary structure.

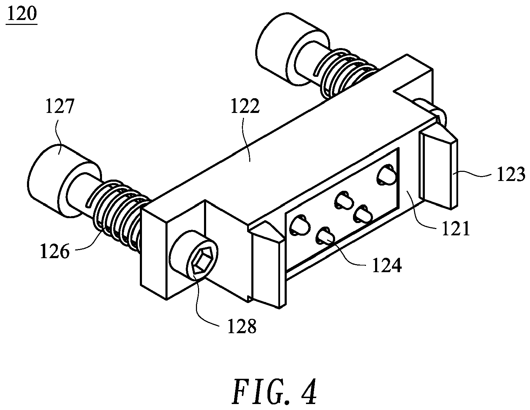

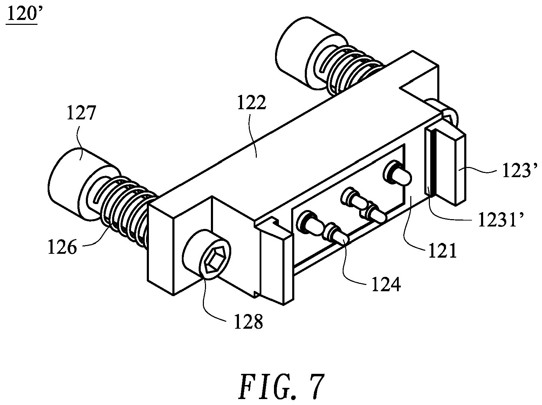

Refer to Figure 7, which is a stereo schematic diagram showing another embodiment of the charging module according to the invention. The structure of the charging module 120' in this embodiment is basicly the same as that of the charging module 120 shown in Figure 4, both of which differ in structure of charging module. The anti-misinsertion key 123' of the charging module 120' further has a step portion 1231'. The conductive terminals 124 are arranged convexly on the plane 121, such that the step portion 1231' may protect the terminals from damage in assembling with the fixing stand.

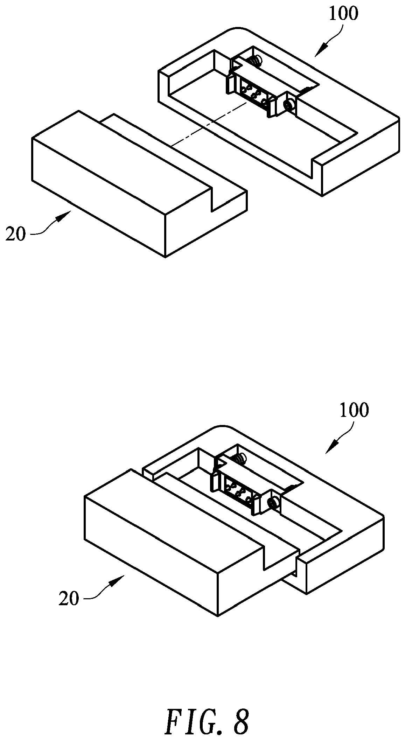

Refer to Figure 8, which is a stereo schematic diagram showing an assembling structure of the fixing seat 100 according to the invention and the conventional fixing stand 20. Although the conventional fixing stand 20 does not have a charging module, it may still get engaged with and fixed into the fixing seat 100 of the invention. That is, a parking pillar equipped with the fixing seat 100 having a charging module according to the invention may also be used for a bicycle equipped with the conventional fixing stand 20. When the conventional fixing stand 20 is engaged with the fixing seat 100 of the invention, the fixing stand 20 will abut against the anti-misinsertion key 123 at first due to larger height of the anti-misinsertion key 123 than the height of the conductive terminals 124, so that the fixing stand 20 will not touch the first conductive terminals 124, and may be retained and located on the fixing seat 100.

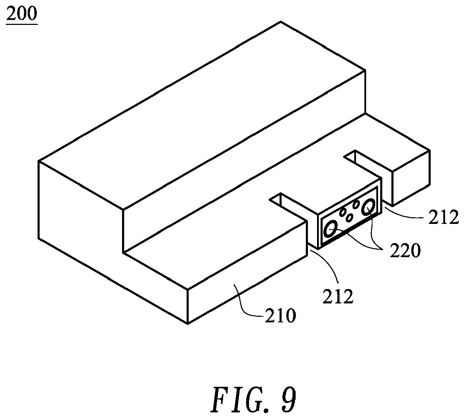

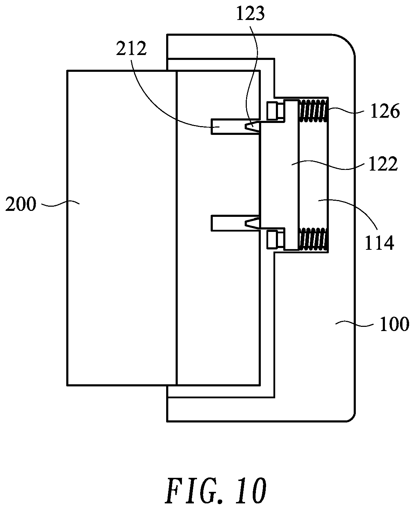

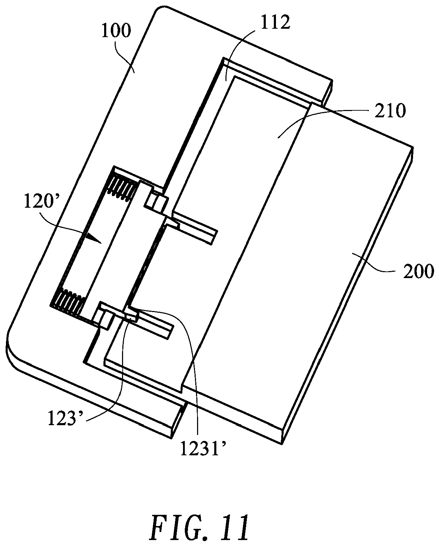

Refer to Figure 9, which is a stereo schematic diagram showing a preferred embodiment of a fixing stand 200 according to the invention. The fixing stand 200 according to the invention has a convex portion 210. Also, as shown in Figure 10, the fixing stand 200 may be engaged into the fixing seat 100 by inserting the convex portion 210 into the concave portion 112 of the fixing seat 100. When the convex portion 210 is inserted into the concave portion 112, the convex portion 210 will push the body 122 for the body 122 to enter the accommodation portion 114, while the elastic piece 126 is compressed accordingly. When the fixing stand 200 is detached from the fixing seat 100, the convex portion 210 departs from the concave portion 112, while the elastic force of the elastic piece 126 resets the body 122. Additionally, the convex portion 210 has two anti-misinsertion grooves 212, which correspond to the anti-misinsertion keys 123 of the fixing seat 100, formed thereon. When the convex portion 210 is inserted into the concave portion 112 of the fixing seat 100, the anti-misinsertion keys 123 are inserted into the anti-misinsertion grooves 212. The fixing stand 200 further includes a plurality of second conductive terminals 220, which correspond to the first conductive terminals 124 of the fixing seat 100, arranged in the convex portion 210 and situated between the two anti-misinsertion grooves 212. When the convex portion 210 is inserted in the concave portion 112, the first conductive terminals 124 and the second conductive terminals 220 are electrically connected. Figure 11 is a stereo assembly diagram showing assembling of the fixing stand 200 in Figure 9 with the fixing seat 100 of the charging module 120' in Figure 7. When the convex portion 210 of the fixing stand 200 is inserted into the concave portion 112 of the fixing seat 100, the front end of the convex portion 210 will abut against the step portion 1231' of the anti-misinsertion key 123' of the charging module 120', such that the fixing stand 200 may only reach the anti-misinsertion key 123' in insertion. Accordingly, terminals are protected from operation damage.

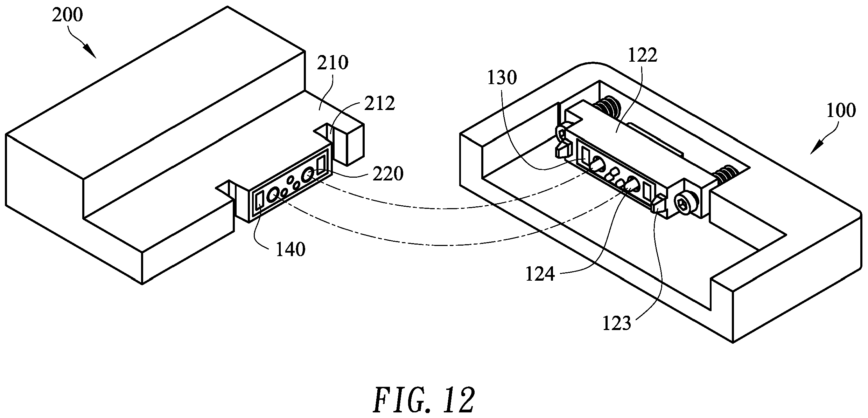

Refer to Figure 12, which is a stereo diagram showing another embodiment for a fixing connector with a fixing seat and a fixing stand according to the invention. In the embodiment, the body 122 further has two first magnets 130 disposed on the plane 121 and situated on two sides of the first conductive terminals 124. The convex portion 210 further has two second magnets 140 corresponding to the first magnets 130. When the convex portion 210 is inserted into the concave portion 122, the first magnets 130 attract the second magnets 140, such that the convex portion 210 is positioned in the concave portion 122, such that the fixing stand 100 is engaged with and located in the fixing seat 200 more authentically.

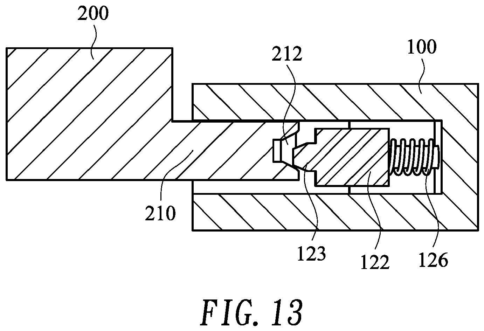

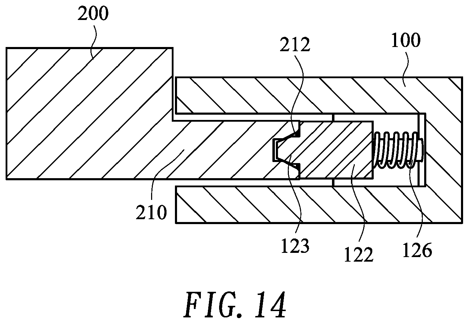

Refer to Figures 13 and 14, which are sectional views showing another embodiment for a fixing connector of a fixing seat and a fixing stand according to the invention. In the embodiment, the anti-misinsertion key 123 may also be in a form of pillar, while the anti-misinsertion groove 212 is in a form of groove, however the shapes and positions thereof are not limited in the invention. The anti-misinsertion key 123 and the anti-misinsertion groove 212 may also be disposed to meet the situation in which the tolerance is greater than normal condition for adjusting and guiding the combination to locate the fixing seat 100 and the fixing stand 200.

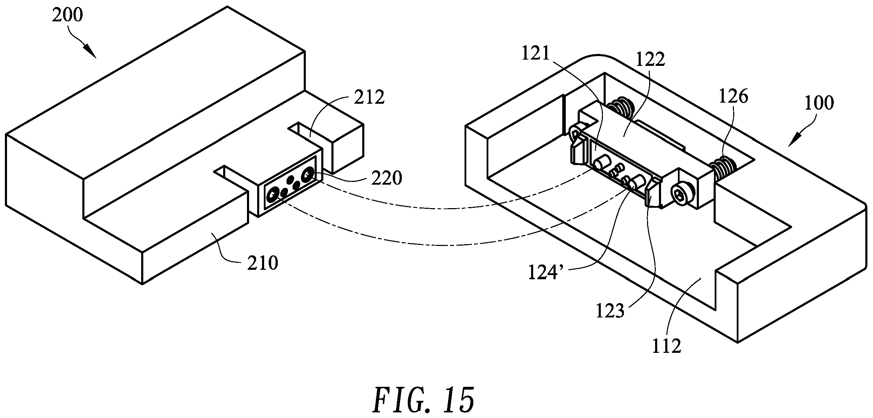

Refer to Figure 15, which is a stereo schematic diagram showing another embodiment for a fixing connector with a fixing seat and a fixing stand according to the invention. In the embodiment, the first terminals 124' are in the form of pillar arranged convexly on the plane 121 of the body 122 fixedly without terminal telescoping capability. When the convex portion 210 is inserted into the concave portion 122, the first conductive terminals 124' are inserted in the second conductive terminals 220 which are in the form of hole. Moreover, the convex portion member may also be instead disposed on the fixing seat, and the concave portion member may also be instead disposed on the fixing stand.

In summary, with electrical connection elements disposed in the fixing seat and the fixing stand respectively of the fixing connector according to the invention, when a user engages the fixing stand of a bicycle with the fixing seat of a parking pillar, electrically connected terminal elements are contacted with each other to achieve electrical connection and charge the bicycle. Furthermore, with disposition of anti-misinsertion structures according to the invention, the conventional fixing stand without charging module may also get engaged with the fixing seat having a charging module, such that the fixing seat of the invention may be applicable to both the conventional fixing stand without charging module and the new fixing stand with a charging module. Moreover, the fixing structure with a charging module according to the invention may be applied to various objects with the need to add a charging module, such as other vehicles, electronic or mechanical products etc. Thus, the invention does be practical for industrial application.

## Claims

1. A fixing seat (100) of a fixing connector with a charging module (120), including:
a seat (110) having a concave portion (112);
the charging module (120) arranged in the concave portion (112), comprising a body (122) having a plane (121) and at least one anti-misinsertion key (123) arranged on the plane (121);
a plurality of first conductive terminals (124) arranged in the body (122) and capable of being protruded out from the plane (121); and
at least one elastic piece (126) arranged between the body (122) and the seat (110)
**characterised in that**
the concave portion (112) comprises an accommodation portion (114)
and **in that** the body (122) further comprises an outer frame (1222) and an assembly part (1224) mounted in the outer frame (1222), on which the anti-misinsertion key (123) is arranged, the first conductive terminals (124) being arranged in the assembly part (1224), wherein the charging module (120) further comprises at least one locating pin (127) and at least one bolt (128), the body (122) is locked in the concave portion (112) by the locating pin (127) and the bolt (128), the locating pin (127) is configured to penetrate into the body (122), and the at
least one elastic piece (126) is harnessed around the locating pin (127).

2. The fixing seat (100) of a fixing connector with a charging module (120) as claimed in claim 1, wherein the anti-misinsertion key (123) comprises a step portion (1231') arranged on the plane (121).

3. The fixing seat (100) of a fixing connector with a charging module (120) as claimed in claim 1, wherein the frame is made of metal, the assembly part (1224) is made of plastic.

4. The fixing seat (100) of a fixing connector with a charging module (120) as claimed in claim 1, wherein the at least one elastic piece (126) is a compressible spring.

5. A fixing connector having a fixing seat (100) with a charging module (120) and a fixing stand (200), including:
a fixing seat (100) as claimed in any one of claims 1 to 4; and
a fixing stand (200) comprising a convex portion (210), the fixing stand (200) being assembled at the fixing seat (100) by inserting the convex portion (210) into the concave portion (112).

6. The fixing connector having a fixing seat (100) with a charging module (120) and a fixing stand (200) as claimed in claim 5, wherein the convex portion (210) has at least one anti-misinsertion groove (212) corresponding to the at least one anti-misinsertion key (123), the anti-misinsertion key (123) being configured to be inserted into the anti-misinsertion groove (212) when the convex portion (210) is inserted in the concave portion (112).

7. The fixing connector having a fixing seat (100) with a charging module (120) and a fixing stand (200) as claimed in claim 6, wherein the fixing stand (200) further comprises a plurality of second conductive terminals (220) corresponding to the first conductive terminals (124), the first conductive terminals (124) and the second conductive terminals (220) are electrically connected when the convex portion (210) is inserted in the concave portion (112).

8. The fixing connector having a fixing seat (100) with a charging module (120) and a fixing stand (200) as claimed in claim 7, wherein the first conductive terminals (124) are arranged convexly on the plane (121) fixedly in the form of pillar, and the second conductive terminals (220) are in the form of a hole.

## Patentansprüche

1. Fixiersitz (100) eines Befestigungsanschlusses mit einem Lademodul (120), der beinhaltet:
einen Sitz (110), der einen konkaven Abschnitt (112) aufweist,
wobei das Lademodul (120) in dem konkaven Abschnitt (112) angeordnet ist und einen Körper (122) umfasst, der eine Ebene (121) und zumindest einen Schlüssel zum Vermeiden eines Falscheinführens (123) aufweist, der an der Ebene (121) angeordnet ist,
eine Vielzahl an ersten leitenden Anschlüssen (124), die in dem Körper (122) angeordnet sind und dazu in der Lage sind, aus der Ebene (121) herauszuragen, und
zumindest ein elastisches Teil (126), das zwischen dem Körper (122) und dem Sitz (110) angeordnet ist,
**dadurch gekennzeichnet, dass**
der konkave Abschnitt (112) einen Aufnahmeabschnitt (114) umfasst und dass der Körper (122) ferner einen äußeren Rahmen (1222) und einen Montageabschnitt (1224) umfasst, der in dem äußeren Rahmen (1222) montiert ist, an dem der Schlüssel zum Vermeiden eines Falscheinführens (123) angeordnet ist, wobei die ersten leitenden Anschlüsse (124) an dem Montageabschnitt (1224) angeordnet sind, wobei das Lademodul (120) ferner zumindest einen Positionierstift (127) und zumindest einen Bolzen (128) umfasst, wobei der Körper (122) durch den Positionierstift (127) und den Bolzen (128) in dem konkaven Abschnitt (112) gesichert ist, wobei der Positionierstift (127) darauf ausgelegt ist, in den Körper (122) zu dringen, und das zumindest eine elastische Teil (126) um den Positionierstift (127) gespannt ist.

2. Fixiersitz (100) eines Befestigungsanschlusses mit einem Lademodul (120) gemäß Anspruch 1, wobei der Schlüssel zum Vermeiden einer Fehleinführung (123) einen Stufenabschnitt (1231') umfasst, der an der Ebene (121) angeordnet ist.

3. Fixiersitz (100) eines Befestigungsanschlusses mit einem Lademodul (120) gemäß Anspruch 1, wobei der Rahmen aus Metall hergestellt ist, der Montageabschnitt (1224) ist aus Kunststoff hergestellt.

4. Fixiersitz (100) eines Befestigungsanschlusses mit einem Lademodul (120) gemäß Anspruch 1, wobei das zumindest eine elastische Teil (126) eine kompressible Feder ist.

5. Befestigungsanschluss, der einen Fixiersitz (100) mit einem Lademodul (120) und einen Fixiersockel (200) aufweist und beinhaltet:
einen Fixiersitz (100) gemäß einem der Ansprüche 1 bis 4 und
einen Fixiersockel (200), der einen konvexen Abschnitt (210) aufweist, wobei der Fixiersockel (200) durch das Einstecken des konvexen Abschnitts (210) in den konkaven Abschnitt (122) an dem Fixiersitz (100) angeordnet ist.

6. Befestigungsanschluss, der einen Fixiersitz (100) mit einem Lademodul (120) und einen Fixiersockel (200) aufweist, gemäß Anspruch 5, bei welchem der konvexe Abschnitt (210) zumindest eine Nut zum Vermeiden einer Fehleinführung (212) aufweist, die dem zumindest einen Schlüssel zum Verhindern einer Fehleinführung (123) entspricht, wobei der Schlüssel zum Verhindern einer Fehleinführung (123) darauf ausgelegt ist, in die Nut zum Vermeiden einer Fehleinführung (212) eingeführt zu werden, wenn der konvexe Abschnitt (210) in den konkaven Abschnitt (112) gesteckt wird.

7. Befestigungsanschluss, der einen Fixiersitz (100) mit einem Lademodul (120) und einen Fixiersockel (200) aufweist, gemäß Anspruch 6, bei welchem der Fixiersockel (200) ferner eine Vielzahl an zweiten leitfähigen Anschlüssen (220) umfasst, die den ersten leitfähigen Anschlüssen (124) entsprechen, wobei die ersten leitfähigen Anschlüsse (124) und die zweiten leitfähigen Anschlüsse (220) elektrisch verbunden sind, wenn der konvexe Abschnitt (210) in den konkaven Abschnitt (112) gesteckt ist.

8. Befestigungsanschluss, der einen Fixiersitz (100) mit einem Lademodul (120) und einen Fixiersockel (200) aufweist, gemäß Anspruch 7, wobei die ersten leitfähigen Anschlüsse (124) fest in der Form von Säulen konvex an der Ebene (121) angeordnet sind und die zweiten leitfähigen Anschlüsse (220) in der Form eines Lochs vorliegen.

## Revendications

1. Socle de fixation (100) d'un connecteur de fixation avec un module de charge (120), incluant:
un socle (110) présentant une portion concave (112);
le module de charge (120) étant agencé dans la portion concave (112), comprenant un corps (122) présentant un plan (121) et au moins une clé anti-insertion erronée (123) agencée sur le plan (121);
une pluralité de premières bornes conductrices (124) agencées dans le corps (122) et capables de faire saillie hors du plan (121); et
au moins une pièce élastique (126) agencée entre le corps (122) et le socle (110)
**caractérisé en ce que**
la portion concave (112) comprend une portion de logement (114) et **en ce que** le corps (122) comprend en outre un cadre extérieur (1222) et une partie d'ensemble (1224) montée dans le cadre extérieur (1222), sur lequel la clé anti-insertion erronée (123) est agencée, les premières bornes conductrices (124) étant agencées dans la partie d'ensemble (1224), dans lequel le module de charge (120) comprend en outre au moins une épingle de positionnement (127) et au moins un boulon (128), le corps (122) est verrouillé dans la portion concave (112) par l'épingle de positionnement (127) et le boulon (128),
l'épingle de positionnement (127) est configurée pour pénétrer dans le corps (122), et l'au moins une pièce élastique (126) est attelée autour de l'épingle de positionnement (127).

2. Socle de fixation (100) d'un connecteur de fixation avec un module de charge (120) selon la revendication 1, dans lequel la clé anti-insertion erronée (123) comprend une portion d'étape (1231') agencée sur le plan (121).

3. Socle de fixation (100) d'un connecteur de fixation avec un module de charge (120) selon la revendication 1, dans lequel le cadre est fait de métal, la partie d'ensemble (1224) est faite de plastique.

4. Socle de fixation (100) d'un connecteur de fixation avec un module de charge (120) selon la revendication 1, dans lequel l'au moins une pièce élastique (126) est un ressort compressible.

5. Connecteur de fixation présentant un socle de fixation (100) avec un module de charge (120) et un support de fixation (200), incluant:
un socle de fixation (100) selon l'une quelconque des revendications 1 à 4; et
un support de fixation (200) comprenant une portion convexe (210), le support de fixation (200) étant assemblé au niveau du socle de fixation (100) en insérant la portion convexe (210) dans la portion concave (112).

6. Connecteur de fixation présentant un socle de fixation (100) avec un module de charge (120) et un support de fixation (200) selon la revendication 5, dans lequel la portion convexe (210) présente au moins une rainure anti-insertion erronée (212) correspondant à l'au moins une clé anti-insertion erronée (123), le clé anti-insertion erronée (123) étant configurée pour être insérée dans la rainure anti-insertion erronée (212) lorsque la portion convexe (210) est insérée dans la portion concave (112).

7. Connecteur de fixation présentant un socle de fixation (100) avec un module de charge (120) et un support de fixation (200) selon la revendication 6, dans lequel le support de fixation (200) comprend en outre une pluralité de secondes bornes conductrices (220) correspondant aux premières bornes conductrices (124), les premières bornes conductrices (124) et les secondes bornes conductrices (220) sont raccordées électriquement lorsque la portion convexe (210) est insérée dans la portion concave (112).

8. Connecteur de fixation présentant un socle de fixation (100) avec un module de charge (120) et un support de fixation (200) selon la revendication 7, dans lequel les premières bornes conductrices (124) sont agencées de manière convexe sur le plan (121) de manière fixe sous la forme d'un pilier, et les secondes bornes conductrices (220) sont sous la forme d'un trou.
